(19) Europäisches Patentamt
European Patent Office
Office européen des brevets

(11) **EP 1 170 473 B1**

(12) **EUROPÄISCHE PATENTSCHRIFT**

(45) Veröffentlichungstag und Bekanntmachung des Hinweises auf die Patenterteilung:
**14.10.2009 Patentblatt 2009/42**

(51) Int Cl.:
***F01N 9/00*** (2006.01)     ***F01N 3/023*** (2006.01)

(21) Anmeldenummer: **01114507.5**

(22) Anmeldetag: **15.06.2001**

(54) **Verfahren zum Betreiben einer Brennkraftmaschine**

Method of operating a combustion engine

Mèthode de commande d'un moteur à combustion

(84) Benannte Vertragsstaaten:
**DE FR GB IT**

(30) Priorität: **07.07.2000 DE 10033160**

(43) Veröffentlichungstag der Anmeldung:
**09.01.2002 Patentblatt 2002/02**

(73) Patentinhaber: **Daimler AG**
**70327 Stuttgart (DE)**

(72) Erfinder:
• **Duvinage, Frank, Dr.**
**73230 Kirchheim (DE)**

• **Nolte, Arno**
**70374 Stuttgart (DE)**
• **Paule, Markus**
**73630 Remshalden (DE)**
• **Schommers, Joachim, Dr.**
**71573 Allmersbach i.T. (DE)**

(74) Vertreter: **JENSEN & SON**
**366-368 Old Street**
**London EC1V 9LT (GB)**

(56) Entgegenhaltungen:
**EP-A- 0 115 722**      **EP-A- 0 349 788**
**DE-C- 4 327 086**      **GB-A- 2 134 408**
**US-A- 5 212 948**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betreiben einer Brennkraftmaschine, insbesondere für Kraftfahrzeuge, mit den Merkmalen des Oberbegriffs des Anspruchs 1.

Aus der EP 0 115 722 B1 ist eine Brennkraftmaschine bekannt, die einen Abgasstrang aufweist, in dem ein regenerierbares Partikelfilter angeordnet ist. Die Brennkraftmaschine weist außerdem Überwachungsmittel auf, die den Beladungszustand des Partikelfilters überwachen. Die Überwachungsmittel bestehen im Wesentlichen aus einem Messfühler, der den Druckverlust über dem Partikelfilter misst. Des Weiteren sind Mittel zum Vergleichen des gemessenen Druckverlustes mit einem Schwellwert vorgesehen, wobei dann ein Regenerationsvorgang gestartet wird, wenn dieser Schwellwert erreicht ist. Der Beladungszustand des Partikelfilters verhält sich jedoch nur bei einem konstanten Betriebszustand der Brennkraftmaschine proportional zum Druckverlust, der in der Abgasströmung bei der Durchströmung des Partikelfilters auftritt. Zur Optimierung der Regeneration des Partikelfilters wird bei der bekannten Vorrichtung der jeweilige Betriebszustand der Brennkraftmaschine berücksichtigt. Hierzu sind Schwellwertveränderungsmittel vorgesehen, die in Abhängigkeit von der Drehzahl und der Belastung der Brennkraftmaschine den Schwellwert für den Druckverlust verändern.

Aus der US 5 212 948 A ist ein Verfahren zum Betreiben einer Brennkraftmaschine mit einem Partikelfilter und Überwachungsmitteln zur Überwachung des Partikelfilters bekannt. Wird eine in Bezug auf den Brennkraftmaschinenbetrieb oder die Partikelfilterhaltbarkeit kritische Beladung festgestellt, so werden die Brennkraftmaschinenabgase durch Betätigung eines Ventils um den Partikelfilter herumgeleitet. Maßgebendes Kriterium für das Auslösen einer Partikelfilterregeneration ist die im Partikelfilter angesammelte Partikelmasse. Als Überwachungsmittel hierfür dient ein Regenerationsmechanismus, welcher als Maß für den Beladungszustand des Partikelfilters einen Faktor k ermittelt, der proportional zur im Filter angesammelten Partikelmasse ist. Eine Partikelfilterregeneration wird bei Erreichen eines Grenzwerts für den durch die Partikelmasse charakterisierten Beladungszustand gestartet. Die zur Regeneration des Partikelfilters erforderliche Temperaturerhöhung wird durch Einschalten eines dem Partikelfilter vorgeschalteten elektrischen Heizelements und Zuführen von Verbrennungsluft zum Partikelfilter aus einer externen Quelle erzielt. Eine Beendigung der Regeneration erfolgt durch Abschalten der Verbrennungsluft, wenn eine Flammenfront die im Partikelfilter angesammelten Partikel über dessen gesamte Länge abgebrannt hat.

DE 43 27 086 C1 offenbart ein Verfahren zum Betreiben einer Brennkraftmaschine mit einem Partikelfilter, wobei eine Überwachung des Partikelfilters durch Messung des Drucks in der Abgasführung vor dem Partikelfilter erfolgt. Wird durch diese Abgasgegendruckmessung festgestellt, dass der Partikelfilter regeneriert werden muss, so wird eine Nacheinspritzung von Kraftstoff in die Zylinder der Brennkraftmaschine derart vorgenommen, dass die Abgastemperatur erhöht wird und eine Partikelfilterregeneration ablaufen kann.

Aufgabe der Erfindung ist es, ein apparativ einfaches, jedoch effektives und effizientes Betriebsverfahren für eine Brennkraftmaschine im Zusammenhang mit einer Regeneration eines zugehörigen Partikelfilters anzugeben.

Diese Aufgabe wird erfindungsgemäß durch ein Verfahren mit den Merkmalen des Anspruchs 1 gelöst.

Die Erfindung beruht auf dem allgemeinen Gedanken, zur Überwachung des Beladungszustandes des Partikelfilters den Strömungswiderstand des Partikelfilters heranzuziehen. Die Erfindung baut dabei auf der Erkenntnis auf, dass sich der Strömungswiderstand des Partikelfilters etwa proportional zum Beladungszustand des Partikelfilters verhält. Dabei ist der Strömungswiderstand des Partikelfilters völlig unabhängig vom Betriebszustand der Brennkraftmaschine. Bei der Erfindung wird somit ein mit dem Beladungszustand korrelierter Signalwert generiert, auf den der jeweilige Betriebszustand der Brennkraftmaschine keinen Einfluß hat. Da somit der tatsächliche Beladungszustand des Partikelfilters genauer vorliegt, kann die Regeneration des Partikelfilters verbessert werden. Darüber hinaus ist es bei der Erfindung grundsätzlich auch möglich, den aktuellen Beladungszustand auch während einer Regeneration des Partikelfilters zu überwachen.

Erfindungsgemäß ist eine Steuerung vorgesehen, die bei Erreichen eines oberen Grenzwertes der Filterbeladung eine Regeneration des Partikelfilters startet. Die Steuerung ist außerdem so ausgebildet, dass sie bei Erreichen eines unteren Grenzwertes der Filterbeladung die Regeneration des Partikelfilters beendet. Die genannten Grenzwerte können bei der Erfindung unabhängig vom Betriebszustand der Brennkraftmaschine definiert werden. Eine derartige Ausführungsform ist außerdem nur dadurch möglich, dass bei der Erfindung die Filterbeladung auch während des Regenerationsbetriebes überwacht werden kann. Durch diese Maßnahme werden reproduzierbare Regenerationsvorgänge durchgeführt, wodurch sich deren Qualität und Effektivität verbessert.

Die Brennkraftmaschine ist vorzugsweise als Dieselmotor ausgebildet. Der Partikelfilter ist zweckmäßig als Rußfilter ausgebildet.

Entsprechend einer bevorzugten Ausführungsform können die Überwachungsmittel einen Abgasmassenstrom-Signalwert generieren, der mit dem aktuellen, das Partikelfilter durchströmenden

Abgasmassenstrom korreliert, und mit diesem Abgasmassenstrom-Signalwert den Strömungswiderstand-Signalwert bestimmen. Bei dieser Ausführungsform wird zur Berechnung des Strömungswiderstandes der Abgasmassenstrom herangezogen, wobei dieser Abgasmassenstrom seinerseits gemessen oder berechnet werden kann. Vorzugsweise berechnen die Überwachungsmittel den Abgasmassenstrom aus dem aktuellen Luftmassenstrom und dem aktuellen Kraftstoffmassenstrom. Hierbei greifen die Überwachungsmittel auf Werte zu, die bei modernen Brennkraftmaschinen in der Motorsteuerung ohnehin zur Verfügung stehen oder ohne weiteres aus den in der Motorsteuerung vorhandenen Daten bestimmt werden können.

Entsprechend einer bevorzugten Ausführungsform können die Überwachungsmittel den Strömungswiderstand-Signalwert in Analogie zu folgender Näherungsgleichung ermitteln:

$$\zeta_F \sim \frac{p_{vF}^2 - (p_{nF} \cdot p_{vF})}{(\dot{m}_{Abgas})^2 \cdot T_{vF}}$$

wobei

| | |
|---|---|
| $\zeta_F$ | $\cong$ Strömungswiderstand des Partikelfilters, |
| $p_{vF}$ | $\cong$ Abgasdruck vor dem Partikelfilter, |
| $p_{nF}$ | $\cong$ Abgasdruck nach dem Partikelfilter, |
| $\dot{m}_{Abgas}$ | $\cong$ Abgasmassenstrom, |
| $T_{vF}$ | $\cong$ Abgastemperatur vor dem Partikelfilter. |

Es ist klar, daß zur Erhöhung der Genauigkeit dieser Näherungsgleichung zusätzlich konstante Faktoren, multiplikative Korrekturen und additive Korrekturen berücksichtigt werden können, um beispielsweise Alterungseffekte, nicht regenerative Rückstände sowie Nichtlinearitäten zu berücksichtigen. Außerdem kann beispielsweise der Exponent des Abgasmassenstromes $\dot{m}_{Abgas}$ mit einem Korrekturfaktor verändert sein.

Der Abgasmassenstrom $\dot{m}_{Abgas}$ wird beispielsweise aus dem angesaugten Luftmassenstrom, aus dem rückgeführten Abgasstrom, aus der regulär eingespritzten Kraftstoffmenge sowie aus der gegebenenfalls zusätzlich eingespritzten Nacheinspritzmenge berechnet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Ein bevorzugtes Ausführungsbeispiel der Erfindung ist in der Zeichnung dargestellt und wird in der nachfolgenden Beschreibung näher erläutert.

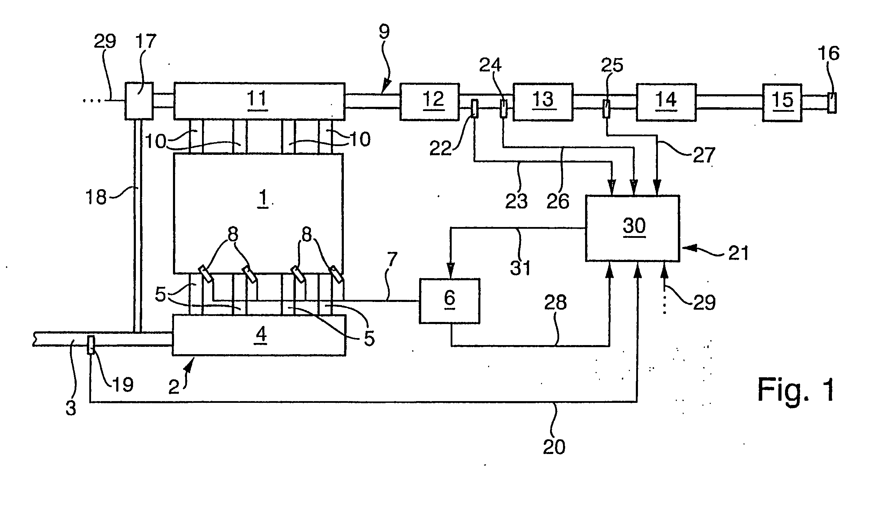

Die einzige Fig. 1 zeigt eine schematisierte Prinzipskizze einer Brennkraftmaschine zur Durchführung des erfindungsgemäßen Verfahrens.

Entsprechend Fig. 1 besitzt eine Brennkraftmaschine 1, die vorzugsweise als Dieselmotor ausgebildet ist, einen Ansaugstrang 2 mit einer Frischluftzuführungsleitung 3 einen Frischluftsammler 4 und mehreren Saugrohren 5. Die Brennkraftmaschine 1 ist außerdem mit einer Einspritzeinrichtung 6 ausgestattet, die beispielsweise über eine Kraftstoffhochdruckleitung 7 (sogenannte "Common-Rail") mehrere Einspritzventile 8 mit Kraftstoff versorgt. Des weiteren ist die Brennkraftmaschine 1 mit einem Abgasstrang 9 ausgestattet, in den das von der Brennkraftmaschine 1 erzeugte Abgas über Abgasrohre 10 in einen Abgassammler 11 eintritt und von dort zunächst einen ersten Abgaskatalysator 12, dann ein Partikelfilter 13, danach einen zweiten Katalysator 14 sowie einen Schalldämpfer 15 durchströmt, bevor das Abgas durch einen Auspuff 16 in die Umgebung austritt. Die Anordnung der Katalysatoren 12 und 14 sowie des Partikelfilters 13 ist hier rein exemplarisch gewählt, so daß der Abgasstrang 9 grundsätzlich auch einen anderen Aufbau aufweisen kann. Das Partikelfilter 13 ist regenerierbar ausgestaltet und vorzugsweise als Rußfilter ausgebildet.

An den Abgassammler 11 kann außerdem ein Abgasrückführungsventil 17 angeschlossen sein, das über eine Abgasrückführungsleitung 18 gezielt Abgas in den Ansaugstrang 2 einspeisen kann.

In der Frischluftzuführungsleitung 3 ist ein Luftmassensensor 19 angeordnet, der die angesaugte Frischluftmenge sensiert und über eine entsprechende Signalleitung 20 an Überwachungsmittel 21 weitergeleitet wird. Im Abgasstrang 9 ist stromauf des Partikelfilters 13 ein Temperatursensor 22 angeordnet, der die Abgastemperatur ermittelt und diese über eine entsprechende Signalleitung 23 an die Überwachungsmittel 21 weiterleitet. Stromauf und stromab des Partikelfilters 13 sind außerdem ein erster Drucksensor 24 und ein zweiter Drucksensor 25 angeordnet, die den Abgasdruck stromauf bzw. stromab des Partikelfilters 13 ermitteln und diesen bzw. damit korrelierte Signalwerte über entsprechende Signalleitungen 26 und 27 an die Überwachungsmittel 21 weiterleiten. Anstelle von zwei stromauf und stromab des Partikelfilters 13 angeordneten Drucksensoren 24 und 25 kann auch ein Differenzdrucksensor vorgesehen sein, wobei dann der Absolutdruck mit Hilfe des Umgebungsdruckes berechnet werden kann, der z.B. im Motorsteuergerät zur Verfügung steht.

Außerdem erhalten die Überwachungsmittel 21 beispielsweise von der Einspritzeinrichtung 6 Signalwerte, die mit der aktuellen eingespritzten Kraftstoffmenge korrelieren. Eine entsprechende Signalleitung ist mit 28 bezeichnet. Des weiteren können die Überwachungsmittel 21 über eine entsprechende Signalleitung 29 über die aktuelle Abgasrückführrate informiert sein.

Die Überwachungsmittel 21 weisen eine Steuerung 30 auf, in der die eingehenden Signale verarbeitet werden. Diese Steuerung 30 kann außerdem eine Regeneration des Partikelfilters 13 veranlassen, wozu die Steuerung 30 beispielsweise auf die Kraftstoffeinspritzeinrichtung 6 einwirkt. Eine entsprechende Steuerleitung ist mit 31 bezeichnet. Es ist klar, daß die Steuerung 30 bzw. die Überwachungsmittel 21 mit einer hier nicht dargestellten Motorsteuerung zusammenwirken oder in diese zumindest teilweise hardwaremäßig integriert oder in diese zumindest teilweise softwaremäßig implementiert sind.

Die Brennkraftmaschine 1 arbeitet wie folgt:

Während eines Normalbetriebs der Brennkraftmaschine 1 enthalten die im Betrieb erzeugten Abgase der Brennkraftmaschine 1 Partikel, insbesondere Rußpartikel, die im Partikelfilter 13 ausgefiltert werden. Dabei reichern sich die Partikel im Partikelfilter 13 an. Durch die zunehmende Ablagerung bzw. Anreicherung der Partikel im Partikelfilter 13 wird dieses mehr oder weniger verstopft, d.h. der Strömungswiderstand des Partikelfilters 13 nimmt zu. Die Überwachungsmittel 21 können aus der mit Hilfe des Luftmassensensors 19 ermittelten Luftmasse sowie aus der von der Kraftstoffeinspritzeinrichtung 6 mitgeteilten Kraftstoffmenge einen Abgasvolumenstrom ermitteln. Es ist klar, daß die Überwachungsmittel 21 bei einer anderen Ausführungsform auch andere geeignete Maßnahmen zur Ermittlung des Abgasmassenstroms $\dot{m}_{Abgas}$ durchführen können.

Des weiteren generieren die Überwachungsmittel 21 aus dem Abgasmassenstrom $\dot{m}_{Abgas}$, aus der Temperatur $T_{vF}$ der Abgase vor dem Partikelfilter 13, aus dem Druck $p_{vF}$ vor dem Partikelfilter 13 sowie aus dem Druck $p_{nF}$ nach dem Partikelfilter 13 unter Zuhilfenahme einer entsprechenden Näherungsgleichung einen Signalwert, der mit einem Strömungswiderstand $\zeta_F$ des Partikelfilters 13 korreliert. Dieser Strömungswiderstand $\zeta_F$ verhält sich proportional zum Füllungsgrad des Partikelfilters 13. Die Überwachungsmittel 21 können somit anhand des generierten Strömungswiderstandes $\zeta_F$ den Befüllungsgrad oder Befüllungszustand des Partikelfilters 13 überwachen.

Bei der vorliegenden Erfindung ist von besonderer Bedeutung, daß der Strömungswiderstand $\zeta_F$ des Partikelfilters 13 unabhängig ist vom Betriebszustand der Brennkraftmaschine 1. Dementsprechend ist der damit ermittelte Befüllungsgrad des Partikelfilters 13 ebenso unabhängig vom aktuellen Betriebspunkt der Brennkraftmaschine 1 sowie unabhängig von der jeweiligen Verbrennungseinstellung der Brennkraftmaschine 1.

In der Steuerung 13 ist beispielsweise ein oberer Grenzwert für einen Befüllungsgrad bzw. für einen Strömungswiderstand $\zeta_F$ gespeichert. Sobald die Überwachungsmittel 21 das Erreichen dieses oberen Grenzwertes feststellen, wird eine Regeneration des Partikelfilters 13 durchgeführt. Zu diesem Zweck wirkt die Steuerung 30 so auf die Einspritzeinrichtung 6 ein, daß diese durch entsprechende Nacheinspritzvorgänge der Brennkraftmaschine 1 mehr Kraftstoff zuführt, als die Brennkraftmaschine für ihren Betriebspunkt benötigt. Dadurch kann eine Temperaturerhöhung der Abgase und somit des Abgasstrang 9 und seiner Komponenten erzielt werden. Sobald im Partikelfilter 13 eine bestimmte Temperatur erreicht ist, z.B. 550˚ C, kann die Regeneration des Partikelfilters 13 ablaufen. Bei der hier gezeigten Ausführungsform wird somit die Regeneration des Partikelfilters 13 durch einen vom Normalbetrieb abweichenden Regenerationsbetrieb der Brennkraftmaschine 1 erreicht. Zum Beenden der Regeneration des Partikelfilters 13 wird die Brennkraftmaschine 1 wieder in ihren Normalbetrieb umgeschaltet. Hier zeigt sich ein weiterer wesentlicher Vorteil der erfindungsgemäßen Brennkraftmaschine. Denn der Strömungswiderstand $\zeta_F$, der mit dem Beladungszustand des Partikelfilters 13 korreliert, kann auch während der Regeneration des Partikelfilters 13 überwacht werden. Dementsprechend kann in der Steuerung 30 ein unterer Grenzwert für den Beladungszustand bzw. für den Strömungswiderstand $\zeta_F$ gespeichert sein, so daß die Steuerung 30 bei Erreichen des unteren Grenzwertes die Regeneration des Partikelfilters 13 beenden kann. Dementsprechend wird die Brennkraftmaschine 1 nur solange in ihrem Regenerationsbetrieb betrieben, wie dies für eine vollständige Regeneration des Partikelfilters 13 erforderlich ist. Der Regenerationsvorgang wird dadurch optimiert.

**Patentansprüche**

1. Verfahren zum Betreiben einer Brennkraftmaschine (1) mit einem Abgasstrang (9) und einem im Abgasstrang (9) angeordneten regenerierbaren Partikelfilter (13) sowie Überwachungsmitteln (21) zur Überwachung des Partikelfilters (13) und mit einer Steuerung (30), wobei

    - die Überwachungsmittel (21) einen Strömungswiderstand-Signalwert generieren, der mit dem aktuellen Strömungswiderstand $\zeta_F$ des Partikelfilters (13) korreliert und aus diesem Strömungswiderstand-Signalwert den aktuellen Beladungszustand des Partikelfilters (13) bestimmen,
    - die Steuerung (30) bei Erreichen eines oberen Grenzwertes der Filterbeladung eine Regeneration des Partikelfilters (13) startet,
    - die Regeneration des Partikelfilters (13) durch einen vom Normalbetrieb abweichenden Regenerationsbetrieb der Brennkraftmaschine (1) erreicht wird,
    **dadurch gekennzeichnet, dass**
    - die Steuerung (30) im Regenerationsbetrieb so auf die Kraftstoffeinspritzeinrichtung (6) der Brennkraftmaschine (1) einwirkt, dass die Kraftstoffeinspritzeinrichtung (6) durch entsprechende Nacheinspritzvorgänge der Brennkraftmaschine (1) mehr Kraftstoff zuführt als die Brennkraftmaschine (1) für ihren Betriebspunkt benötigt, wodurch die Temperatur des Partikelfilters (13) derart erhöht wird, dass die Regeneration des Partikelfilters (13) ablaufen kann, und
    - die Steuerung (30) bei Erreichen eines unteren Grenzwertes der Filterbeladung die Regeneration des Partikelfilters (13) beendet, indem die Brennkraftmaschine (1) wieder in ihren Normalbetrieb umgeschaltet wird.

2. Verfahren nach Anspruch 1,

**dadurch gekennzeichnet, dass**
die Überwachungsmittel (21) einen Abgasmassenstrom-Signalwert generieren, der mit dem aktuellen, das Partikelfilter (13) durchströmenden Abgasmas-senstrom ($\dot{m}_{Abgas}$) korreliert, und mit diesem Abgasmassenstrom-Signalwert den Strömungswiderstand-Signalwert bestimmen.

**3.** Verfahren nach Anspruch 2,
**dadurch gekennzeichnet, dass**
die Überwachungsmittel (21) den Abgasmassen-strom ($\dot{m}_{Abgas}$) aus dem aktuellen Luftmassenstrom und dem aktuellen Kraftstoffmassenstrom berechnen.

**4.** Verfahren nach einem der Ansprüche 1 bis 3,
**dadurch gekennzeichnet, dass**
die Überwachungsmittel (21) den Strömungswiderstand-Signalwert in Analogie zu folgender Nähe-rungsgleichung ermitteln:

$$\zeta_F \sim \frac{p_{vF}^2 - (p_{nF} \cdot p_{vF})}{(\dot{m}_{Abgas})^2 \cdot T_{vF}}$$

wobei

$\zeta_F \cong$ Strömungswiderstand des Partikelfilters,
$p_{vF} \cong$ Abgasdruck vor dem Partikelfilter,
$p_{nF} \cong$ Abgasdruck nach dem Partikelfilter,
$\dot{m}_{Abgas} \cong$ Abgasmassenstrom,
$T_{vF} \cong$ Abgastemperatur vor dem Partikelfilter.

**Claims**

**1.** Method for operating an internal combustion engine (1) with an exhaust system (9), with a regenerative particulate filter (13) located in the exhaust system (9), with monitoring means (21) for monitoring the particulate filter (13) and with a control unit (30), wherein

- the monitoring means (21) generate a flow resistance signal level correlating with the current flow resistance $\zeta_F$ of the particulate filter (13) and determine the current loading state of the particulate filter (13) from this flow resistance signal level,
- the control unit (30) starts a regeneration of the particulate filter (13) if an upper limit value of filter loading is reached,
- the regeneration of the particulate filter (13) is effected by a regeneration mode of the internal combustion engine, which differs from normal operation,

**characterised in that**
- the control unit (30) acts on the fuel injection unit (6) of the internal combustion engine (1) in the regeneration mode such that the fuel injection unit (6), by means of suitable post-injection processes, supplies more fuel to the internal combustion engine (1) than the internal combustion engine (1) requires for its operating point, whereby the temperature of the particulate filter (13) is increased to allow the regeneration of the particulate filter (13) to proceed, and
**in that**
- if a lower limit value of filter loading is reached, the control unit (30) stops the regeneration of the particulate filter (13) by switching the internal combustion engine (1) back to normal operation.

**2.** Method according to claim 1,
**characterised in that**
the monitoring means (21) generate an exhaust gas mass flow signal level correlating with the current exhaust gas mass flow ($m_{Abgas}$) through the particulate filter (13) and determine the flow resistance signal level with the aid of this exhaust gas mass flow signal level.

**3.** Method according to claim 2,
**characterised in that**
the monitoring means (21) calculate the exhaust gas mass flow ($m_{Abgas}$) from the current air mass flow and the current fuel mass flow.

**4.** Method according to any of claims 1 to 3,
**characterised in that**
the monitoring means (21) determine the flow resistance signal level in analogy to the following approx-imation equation:

$$\varsigma_F \sim \frac{P_{vF}^2 - (P_{nF} \bullet P_{vF})}{\left(\dot{m}_{Abgas}\right)^2 \bullet T_{vF}}$$

wherein

$\zeta_F \cong$ flow resistance of particulate filter,
$p_{vF} \cong$ exhaust gas pressure upstream of partic-ulate filter,
$p_{nF} \cong$ exhaust gas pressure downstream of par-ticulate filter,
$m_{Abgas} \cong$ exhaust gas mass flow,
$T_{vF} \cong$ exhaust gas temperature upstream of particulate filter.

**Revendications**

1. Méthode de commande d'un moteur à combustion interne (1) doté d'une ligne d'échappement (9) et un filtre à particules (13) régénérable disposé dans la ligne d'échappement (9) ainsi que des moyens de contrôle (21) pour contrôler le filtre à particules (13) et dotés d'une commande (30),

    - les moyens de contrôle (21) générant une valeur de signal de résistance au flux, qui est en corrélation avec la résistance au flux $\zeta_F$ actuelle du filtre à particules (13), déterminent à partir de cette valeur de signal de résistance au flux l'état de charge actuel du filtre à particules (13),
    - la commande (30) commence une régénération du filtre à particules (13) lorsque l'une valeur limite supérieure de l'état de charge est atteinte,
    - la régénération du filtre à particules (13) est atteinte par un mode de régénération du moteur à combustion interne (1) s'écartant du fonctionnement normal,
    **caractérisé en ce que**
    - la commande (30) dans le mode de régénération agit de manière telle sur le dispositif d'injection de carburant (6) du moteur à combustion interne (1) que le dispositif d'injection de carburant (6) amène par des procédés de post-injection correspondants du moteur de combustion interne (1) une plus grande quantité de carburant que ce dont a besoin le moteur à combustion interne (1) pour son point de fonctionnement, ainsi la température du filtre à particules (13) augmente dans une telle mesure que la régénération du filtre à particules (13) peut se produire, et
    - la commande (30) achève la régénération du filtre à particules (13) lorsqu'une valeur limite inférieure de la charge du filtre est atteinte de sorte que le moteur à combustion interne (1) puisse commuter de nouveau en fonctionnement normal.

2. Méthode selon la revendication 1, **caractérisée en ce que** les moyens de contrôle (21) génèrent une valeur de signal du flux massique d'échappement, laquelle est en corrélation avec le flux massique d'échappement ($m_{\text{gaz d'échappement}}$) passant au travers du filtre à particules (13), et déterminent avec cette valeur de signal de flux massique d'échappement la valeur de signal de résistance au flux.

3. Méthode selon la revendication 2, **caractérisée en ce que** les moyens de contrôle (21) calculent le flux massique d'échappement ($m_{\text{gaz d'échappement}}$) à partir du flux massique de l'air actuel et du flux massique du carburant.

4. Méthode selon l'une quelconque des revendications 1 à 3, **caractérisé en ce que** les moyens de contrôle (21) déterminent la valeur de signal de résistance de flux par analogie avec l'équation d'approximation suivante :

$$\zeta_F \sim \frac{P^2_{vF} - (P_{nF} \cdot P_{vF})}{(m_{\text{gaz d'échappement}})^2 \cdot T_{vF}}$$

A cet effet

$\zeta_F \equiv$ Résistance de flux du filtre à particules
$P_{vF} \equiv$ Pression des gaz d'échappement avant le filtre à particules
$P_{nF} \equiv$ pression des gaz d'échappement après le filtre à particules

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0115722 B1
- US 5212948 A

- DE 4327086 C1